(19) Europäisches Patentamt
European Patent Office
Office européen des brevets

(11) **EP 2 208 083 B1**

(12) **EUROPEAN PATENT SPECIFICATION**

(45) Date of publication and mention of the grant of the patent:
**07.08.2013 Bulletin 2013/32**

(51) Int Cl.:
*G01S 5/16* (2006.01)  *G01S 3/786* (2006.01)

(21) Application number: **07849709.6**

(86) International application number:
**PCT/IT2007/000740**

(22) Date of filing: **23.10.2007**

(87) International publication number:
**WO 2009/054010 (30.04.2009 Gazette 2009/18)**

(54) **SYSTEM FOR THE PRECISION LOCALIZATION OF A TARGET ON THE GROUND BY A FLYING PLATFORM AND ASSOCIATED METHOD OF OPERATION**

SYSTEM ZUR PRÄZISIONSLOKALISIERUNG EINES ZIELS AM BODEN DURCH EINE FLIEGENDE PLATTFORM UND DIESBEZÜGLICHES BETRIEBSVERFAHREN

SYSTÈME POUR LA LOCALISATION PRÉCISE D'UNE CIBLE AU SOL PAR UNE PLATEFORME EN VOL ET PROCÉDÉ DE FONCTIONNEMENT ASSOCIÉ

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**21.07.2010 Bulletin 2010/29**

(73) Proprietor: **SELEX Galileo S.p.A.**
**CAMPI BISENZIO (FI) (IT)**

(72) Inventor: **MANETTI, Valerio**
**I-34170 Gorizia (IT)**

(74) Representative: **Bergadano, Mirko et al**
**Studio Torta S.p.A.**
**Via Viotti, 9**
**10121 Torino (IT)**

(56) References cited:
**EP-A- 1 783 455**   **EP-A- 1 801 610**
**DE-A1- 3 735 062**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention concerns a system for the precision localization of a target on the ground by a flying platform and the associated method of operation.

In particular, the present invention concerns a system that is able to localize a target by means of a flying platform corresponding to an aircraft flown by a pilot or, in alternative, a so-called UAV (Unmanned Aerial Vehicle), the position of which is controlled from a remote control station and to which the treatment herein makes explicit reference, but without any loss in generality.

BACKGROUND ART

As is known, the systems currently used for so-called RISTA missions (Reconnaissance, Intelligence, Surveillance & Target Acquisition), for the localization of a target in an area monitored by a flying platform, typically include: a flying platform composed of an aircraft, a camera mounted on the aircraft with adjustable training to take images of the ground below and a camera movement device, which is able to adjust the tracking angles moment by moment, within the camera's tracking axis space.

The above-mentioned localization systems also comprise a device able to detect the position of the aircraft moment by moment, typically consisting of a GPS (Global Position System) receiver, and a measurement device corresponding to a laser range-finder device, which is able to measure the distance between the aircraft and the target framed by the camera.

The system also comprises a central processing unit that includes storage means containing a digital cartographic map representing the ground to monitor in an X,Y,Z Cartesian reference system, and a computing unit that is able to calculate the position of the target on the ground in function of a series of parameters, such as: the instantaneous position of the aircraft, the angles that identify the attitude of the aircraft with respect to a local vertical and the direction of the prow of the aircraft with respect to the geographical north, the tracking angles of the camera and, lastly, the measurement of the distance between the aircraft and the target framed by the camera.

In the above-described systems, the use of the laser range-finder is found to be quite disadvantageous, as besides heavily affecting the overall cost of making the localization system, it is particularly heavy and complex to control, therefore causing an increase in the structural and manufacturing complexity of the electronic system dedicated to controlling the flying platform when it is in flight.

To this end, target localization systems have been made that work without the aid of a laser range-finder device, in which the position of the target is determined on the basis of the altitude of the ground indicated on the cartographic map instead of the distance between the aircraft and the target to be detected. However, although these target localization systems are cheaper, on the whole, than systems that use a laser range-finder device, they have the significant drawback of not being very precise, as they are implicitly affected by an error, which is directly correlated to the discretization error introduced by the ground altitude data contained in the digital cartographic map.

In the case in point, experimental tests have demonstrated that the altitude error results in a localization error in the target's position of approximately 25-50 m in the more favourable cases, and up to 200-400 m in cases of insufficient discretization of the altitude data contained in the digital cartographic map.

EP1783455 discloses an airborne reconnaissance system comprising gimbals having at least two degrees of freedom, one array of light sensors positioned on the gimbals for being directed by the same within at least two degrees of freedom, map storage means for storing one Digital Elevation Map of an area of interest, divided into portions, inertial navigation system for real-time providing to a gimbals control unit navigation and orientation data of the aircraft with respect to a predefined global axes system, Portion selection unit for selecting, one at a time, another area portion from the area of interest, and servo means for directing the gimbals. The system uses data from the inertial navigation system and from the digital elevation map for real-time calculating direction to selected area portions, and for maintaining the direction during integration of light from the terrain, and for producing corresponding images of area portions.

FR2798999 discloses an apparatus and method for determining the position of terrestrial targets by use of an airplane. The object locating method includes: designation of a ground object in an image furnished by a camera on the airplane; tracking the object by shape reconnaissance in the camera image, which is stabilized so that the line of sight remains pointed on the object; a sequence of measuring operations for the elevation angle of the object with respect to the aircraft, of the aircraft's position and its orientation; and calculation of the distance and altitude relative to the route of the sequence, each calculation taking into account the group of previous carried out measurements by a statistical filter such as a Kalman filter.

US6281970 B1 discloses a system for detection and localisation of fires using an airborne pod equipped with a passive infrared (IR) scanner. The pod's position and attitude are determined by a GPS/RDF or GPS/IMU unit, and the direction from the pod to the detected IR hot spot is computed. From this information, the pod solves the trigonometry to calculate the "virtual" location of the fire on the horizontal plane of a ground beacon. A fire position error arises out of difference between the altitude of the pod above the forest floor and elevation differences at the fire hot spot (e.g. in hilly terrain). By incorporating topographic map data, it is possible to provide the corrected or minimized error in the detected fire hot spot.

DISCLOSURE OF INVENTION

The object of the present invention is therefore that of embodying a system for the precision localization of a target by means of a flying platform that, on the one hand, is devoid of the laser range-finder device and therefore economic to manufacture and, on the other, guarantees a precision in the target's position having an order of precision substantially the same as that which can be achieved with systems using a laser range-finder device.

According to the present invention, a target localization system is embodied as propounded in claim 1 and preferably, but not necessarily, in any of the claims directly or indirectly dependent on claim 1.

According to the present invention, a target localization method is also provided, as propounded in claim 7 and preferably, but not necessarily, in any of the claims directly or indirectly dependent on claim 7.

According to the present invention, a computer is also embodied, as propounded in claim 12.

Lastly, according to the present invention, a software product is embodied, as propounded in claim 13.

BRIEF DESCRIPTION OF THE DRAWINGS

The present invention shall now be described with reference to the enclosed drawings, which illustrate a non-limitative example of embodiment, where:

- Figure 1 schematically shows a system for localizing a target on the ground, embodied according to the principles of the present invention,
- Figure 2 is the first part of a flowchart of the operations implemented by the system shown in Figure 1 during its operation,
- Figure 3 is the second part of the flowchart shown in Figure 2,
- Figure 4 shows a schematic side view of the system in two different operational moments,
- Figure 5 shows a schematic aerial view of the system shown in Figure 4 during the calculation of the first distance,
- Figure 6 shows a perspective view of the system shown in Figure 4 during the calculation of the second distance, and
- Figure 7 shows an aerial view of the system shown in Figure 4 during the calculation of the second distance.

BEST MODE FOR CARRYING OUT THE INVENTION

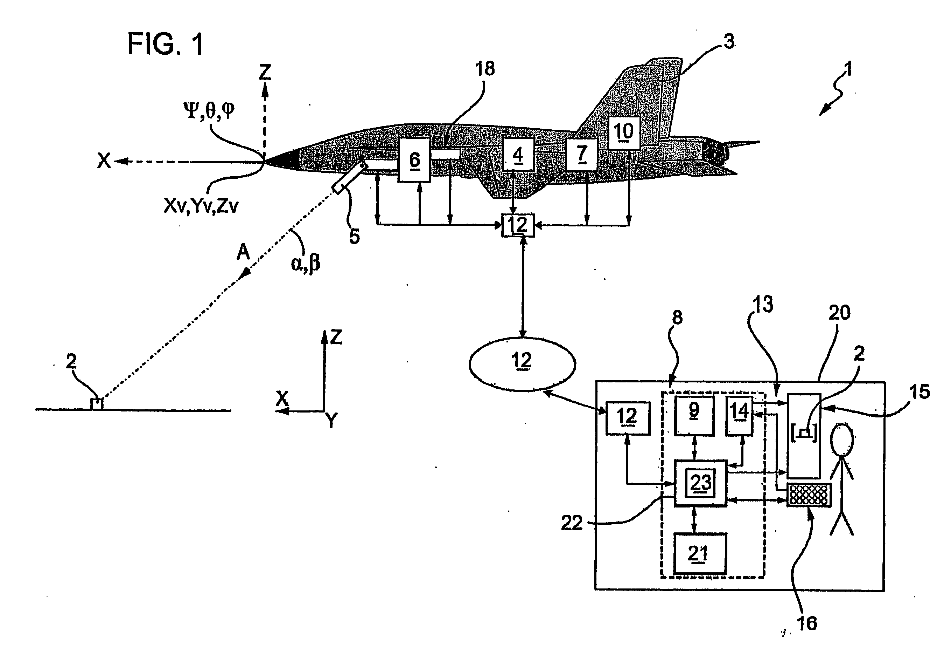

With reference to Figure 1, reference numeral 1 indicates, in its entirety, a system using a flying platform to monitor an area in order to identify and localize a target 2 present inside the monitored area with high precision.

The system 1 is preferably, but not necessarily, employed for carrying out so-called RISTA missions (Reconnaissance, Intelligence, Surveillance & Target Acquisition) and basically comprises a flying platform consisting of an aircraft 3 that, in the example shown, corresponds to a UAV (unmanned aircraft), which can be controlled from a control station 20 situated in a remote location with respect to the area to monitor. Nevertheless, it is opportune to specify that the aircraft 3 could be an aircraft with a pilot, or rather an aircraft directly controlled by an pilot onboard the aircraft itself, in which localization takes place on the aircraft 3 and the various components of the system 1, described in detail in the following, are integrated within the aircraft 3 itself.

With reference to Figure 1, the aircraft 3 comprises a measurement device 4 able to determine the attitude of the aircraft 3, moment by moment. In particular, the measurement device 4 comprises a series of electronic sensors (not shown) that, moment by moment, measure the Heading $\psi$, Pitch $\theta$ and Roll $\varphi$ angles of the aircraft 3, and a processing unit (not shown) that, based on the measured angles, determines the attitude of the craft 3 with respect to a vertical reference axis (not shown) and the direction of the prow of the aircraft with respect to the geographical north. It is opportune to specify that the Heading $\psi$, Pitch $\theta$ and Roll $\varphi$ angles are a representation of the Euler angles corresponding to the possible rotations of the aircraft 3 in space around the respective X, Y or Z-axes of a Cartesian reference system. The determination of the attitude of an aircraft 3 in space based on the Heading $\psi$, Pitch $\theta$ and Roll $\varphi$ angles is known and therefore shall not be described any further.

In particular, the Heading $\psi$ angle corresponds to the angle between a vertical plane on which the aircraft 3 lies and a vertical plane passing through the longitudinal axis of the aircraft 3 when positioned with its prow in the direction of a certain reference point, corresponding to the geographical north.

The aircraft 3 also comprises a camera 5, working in the visible and/or infrared band, which is mounted on the aircraft 3 with its own tracking axis A, freely adjustable in space, to allow the acquisition of images of the ground below.

The aircraft 3 also comprises a mechanical positioner member 6, which is able to control the movement of the camera 5 with respect to the aircraft 3 to change the Pan $\alpha$ and Tilt $\beta$ tracking angles, and a device 7, such as a GPS (Global Position System) receiver for example, which has the function of detecting, moment by moment, the position XV, YV, ZV of the aircraft 3 in space with respect to a spatial reference system, preferably of the X,Y,Z Cartesian type.

The system 1 also comprises a remote-control system 8 capable of allowing an operator at the remote station 20 to control the route of the aircraft 3 according to a certain flight segment. The remote-control system 8 comprises a remote-control device 9 installed in the control station 20 to generate the commands regarding a flight route established by the operator, a remote-control unit 10 installed onboard the aircraft 3 to pilot the aircraft 3 according to the flight route generated by the remote-control device 9, and a data transmission and reception system 12 able to provide two-way data communications between the aircraft 3 and the remote control station 20 so as to allow the exchange of data between the various devices present at the control station 20 and the equipment mounted onboard the aircraft 3.

The system 1 also comprises a video-tracking system 13, which has the task of controlling the mechanical positioner member 6 in order to keep the camera 5 with its own tracking axis A trained on a target 2 selected by the operator during the flight of the aircraft 3.

In this case, the video-tracking system 13 comprises a first processing module 14 that is installed at the control station 20 to receive the images captured by the camera 5 from the transmission and reception system 12 and is able to display them to the operator via a video display unit 15, and a control device 16, such as a keyboard for example, to allow the operator to control the processing module 14 to select or mark the target that must be localized on the image of the ground shown by the video display unit 15.

The video-tracking system 13 also comprises a first control unit 18 mounted onboard the aircraft 3 that receives a series of information from the processing module 14, via the data transmission and reception system 12, regarding the target marked or selected by the operator and, on the basis of this information, controls the mechanical positioner member 6 so that the camera 5 remains constantly trained on the target 2 selected by the operator.

The remote-control 8 and video-tracking 13 systems are known and therefore shall not be described any further, except for specifying that the remote-control module 9 and the first processing module 14 can be integrated in a single processing unit, for example, a Personal Computer located at the remote control station.

The system 1 also comprises a memory device 21 preferably, but not necessarily, installed at the remote control station 20 and preferably, but not necessarily, containing at least one digital cartographic map associated with the area to be monitored, and a processing device 22 that is preferably, but not necessarily, installed at the remote control station 20 for localizing the position of the target 2 on the ground.

In particular, the processing device 22 comprises a computation module 23 that implements an algorithm, described in detail further on, able to localize the position of the target 2 on the ground with precision.

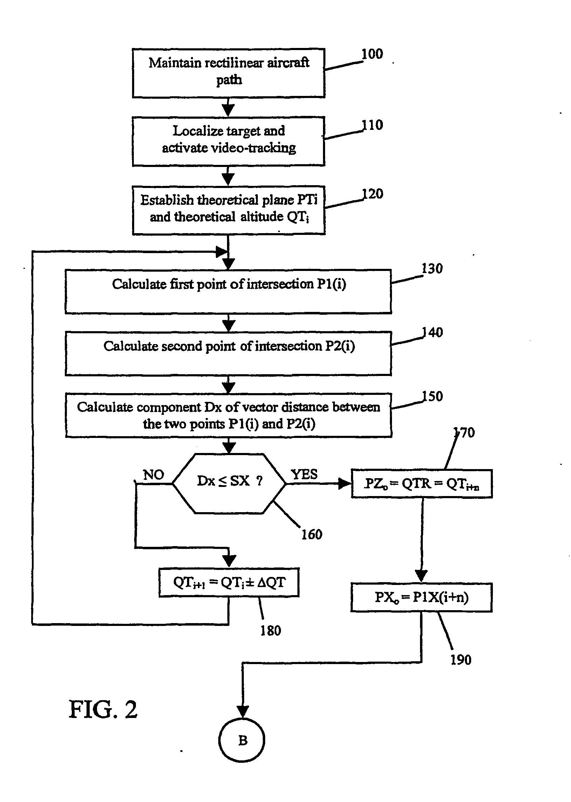

With reference to Figures 2-6, the precision localization algorithm implemented by the computation module 23 is essentially based on the concept of:

- temporarily piloting the aircraft 3 along a rectilinear flight segment TR above the ground on which the target 2 is present,
- calculating, at two successive moments in time during the flight of the aircraft 3 along the rectilinear flight segment TR, at least two points of intersection between the tracking axis A of the camera 5 and a theoretical plane associated with the ground and having a preset initial altitude,
- repeatedly varying the altitude of the theoretical plane by a preset value and calculating the reciprocal position of the two points of intersection at each variation in altitude until a first condition of precision localization is reached, in which the distance between the two points of intersection has a minimum value lower than a first preset threshold, and
- assigning the altitude value associated with a condition of precision localization, which is found to be satisfied when the calculated distance has a minimum value below the preset threshold, to the position of the target 2.

In other words, the precision localization algorithm is essentially based on the principle of:

a) establishing a theoretical plane PTi associated with the area to monitor and having an initial theoretical altitude QTi, which indicates the height of the theoretical plane PTi with respect to a preset reference plane PTO, positioned at zero altitude for example,

b) localizing a target 2 on the ground via the camera 5 mounted onboard the aircraft 3 and keeping the tracking axis A of the camera 5 trained on the target 2 via the video-tracking system 13,

c) during localization, keeping the flight of the aircraft 3 substantially rectilinear, at a given height with respect to the reference plane PTO and substantially parallel to the theoretical plane PTi,

d) at a first time t1, determining a first point P1(i) of intersection between the tracking axis A of the camera 5 trained on the target 2 and the theoretical plane PTi set at theoretical altitude QTi,

e) at a second time t2, after the first time t1, determining a second point P2(i) of intersection between the tracking axis A of the camera 5 trained on the target 2 and the theoretical plane PTi set at theoretical altitude QTi,

f) calculating a first distance Dx between the points P1(i) and P2(i) of intersection calculated at times t1 and t2 respectively, and

g) in the case in which the first calculated distance Dx is less than or equal to a first preset error threshold SX, detecting a first condition of precision localization and assigning the theoretical altitude QTi associated with the theoretical plane PTi to the position of the target PZo, or

h) instead, if the first calculated distance Dx exceeds a preset error threshold SX, changing the theoretical altitude QTi assigned to the theoretical plane PTi by a preset value AQTi according to the relation QTi+1=QTi+$\Delta$QTi and reiterating phases c), d), e), f), g) and h) again, until the first condition of precision localization indicated in point g) is satisfied.

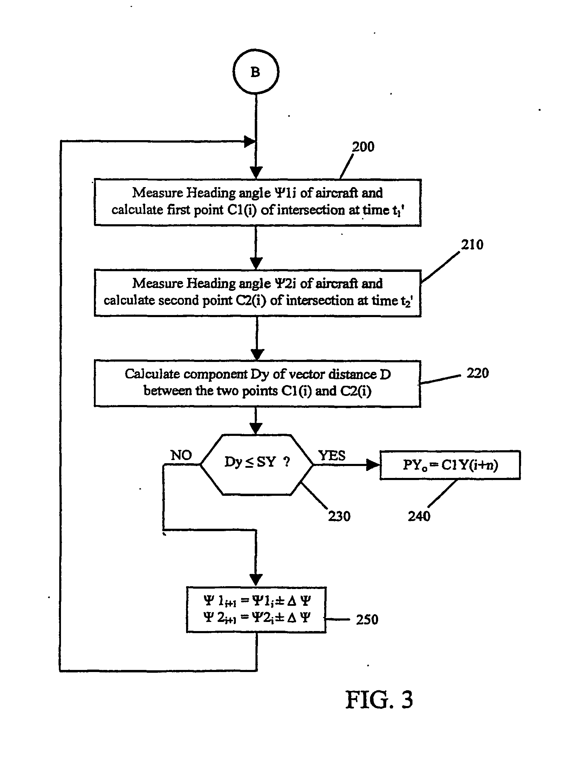

With reference to Figures 2 and 3, the method of operation of the system 1 for the precision localization of the target 2 shall now be described in detail.

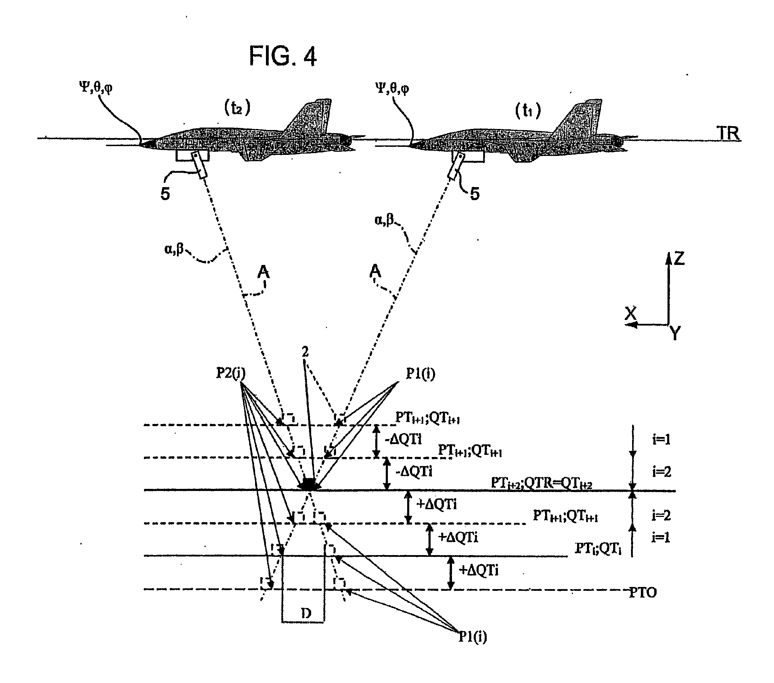

In the initial phase, the remote-control system 8 takes care of piloting the aircraft 3 above the area to be monitored at a certain height with respect to the reference plane PTO, maintaining a substantially horizontal and rectilinear flight path (Figures 4, 5 and 6) (block 100).

In this phase, the mechanical positioner member 6 actuates the movements of the camera 5 until a condition of localization of the target 2 occurs, i.e. it is framed by the camera 5, this last condition being satisfied when the target 2 is displayed by the video display unit 15.

Once the target 2 has been framed, tracking of the target 2 is activated via the video-tracking system 13 (block 110), which after the operator has selected the target 2 takes care of moving the mechanical positioner member 6 in a manner such that the tracking axis A of the camera 5 remains constantly trained on the target 2 during the flight of the aircraft 3. In this phase of tracking the target 2 with the video-tracking system 13, the image of the target 2 preferably, but not necessarily, remains in a viewable point of the video display unit 15, for example, located in the central part of the same video display unit 15.

During the flight of the aircraft 3 along the rectilinear segment TR and after training the target 2, at a time t1, the computation module 23 determines the position in space of the tracking axis A of the camera 5 on the basis of the absolute position of the aircraft XV, YV, ZV, the Heading $\psi$, Pitch $\theta$ and Roll $\varphi$ angles of the aircraft 3, and the Pan $\alpha$ and Tilt $\beta$ tracking angles (block 130). In this phase, the computation module 23 calculates a first point P1(i) of intersection between the tracking axis A of the camera 5 and a theoretical plane PTi set at an initial theoretical altitude QTi (in which i is a numeric value indicating the calculation cycle implemented by the computation module 23).

It is opportune to specify that the initial theoretical plane PTi can preferably, but not necessarily, correspond to the surface plane of the cartographic map, while the theoretical altitude QTi can preferably, but not necessarily, correspond to the altitude assigned to the cartographic map itself.

At a time t2=t1+$\Delta$t, following time t1, the computation module 23 determines the position in space of the tracking axis A of the camera 5 on the basis of the absolute position of the aircraft XV, YV, ZV, the Heading $\psi$, Pitch $\theta$ and Roll $\varphi$ angles of the aircraft 3, and the Pan $\alpha$ and Tilt $\beta$ tracking angles. In this phase, the computation module 23 calculates a second point P2(i) of intersection between the tracking axis A of the camera 5 and the theoretical plane PTi set at the initial theoretical altitude QTi (block 140).

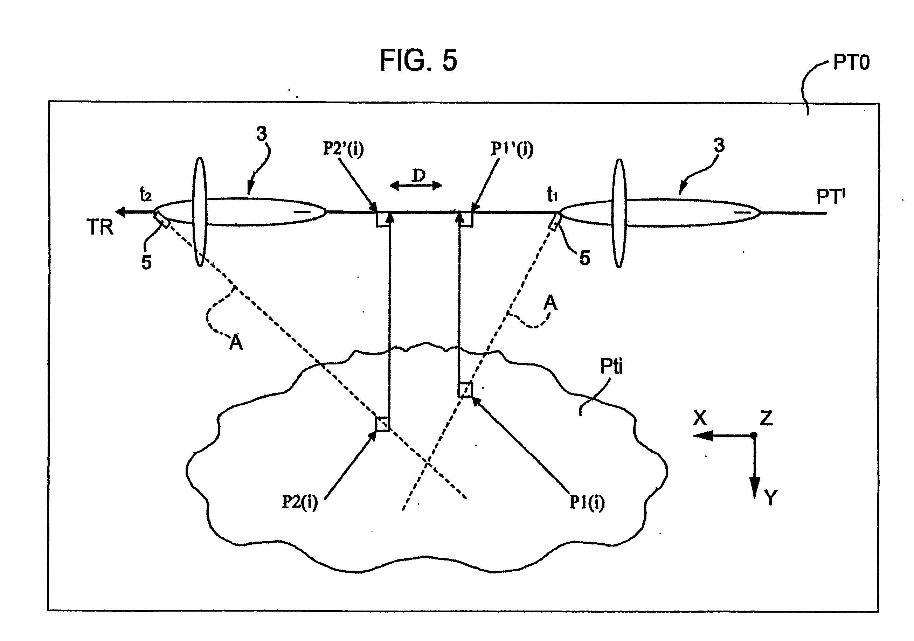

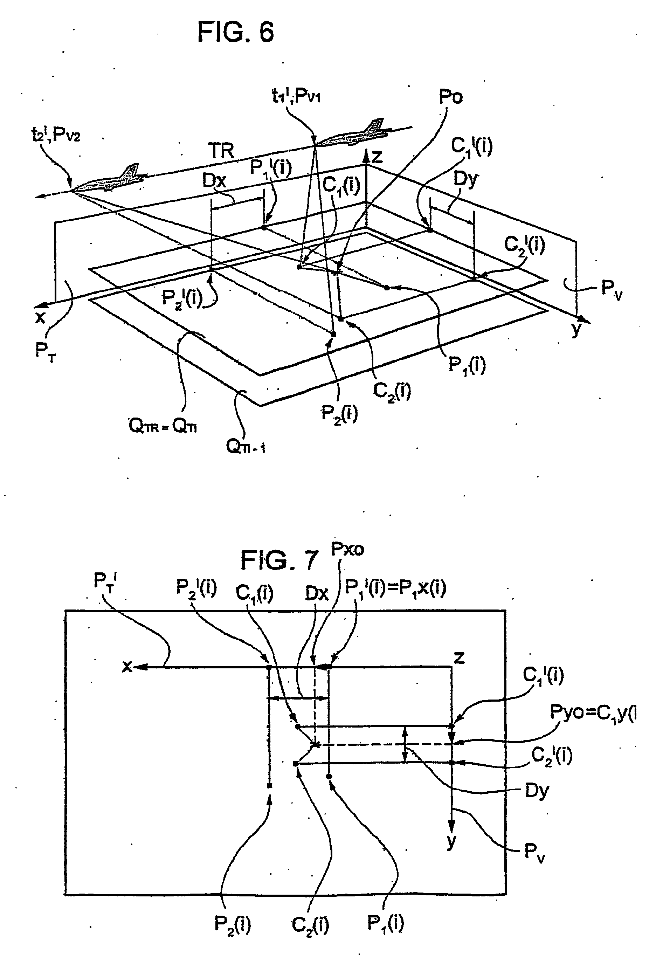

Following the determination of the two points of intersection P1(i) and P2(i), the computation module 23 calculates a first distance Dx of the distance vector D between the first P1(i) and the second point P2(i) (block 150). It is opportune to specify that the first distance Dx corresponds to the value of the component of the distance vector D on a vertical plane PT' orthogonal to the reference plane PTO passing through a line coincident with the rectilinear path TR flown by the aircraft 3 (Figures 5 and 6). In particular, the first distance Dx is preferably, but not necessarily, determined by calculating the distance between the points P1'(i) and P2'(i) obtained from the orthogonal projection of the first and second points of intersection P1(i) and P2(i) on the plane PT' (Figures 5 and 6).

Furthermore, it is opportune to specify that the first distance Dx is directly correlated to the localization error as, in error-free conditions of detecting the position of the target 2, the first P1(i) and the second P2(i) points of intersection are substantially coincident and consequently the first distance Dx is found to be null.

Following the calculation of the first distance Dx, the computation module 23 compares the first distance Dx with a first distance threshold SX and checks, on the basis of this comparison, whether or not a first condition of precision localization is satisfied (block 160). In particular, the first condition of precision localization is satisfied when the first distance Dx is less than or equal to the first distance threshold SX. In this case, the computation module 23 detects if the first condition of precision localization is satisfied via the following relation:

$$Dx <= SX$$

If the first distance Dx is greater than the first threshold SX (NO exit from block 160), the computation module 23 implements a series of operation to minimize the first distance Dx.

In particular, the convergence of the first distance Dx to a minimum value contemplates changing the altitude QTi of the theoretical plane PTi of the cartographic map by a preset increment or decrement of preset value $\Delta QT$, according to the relation

$$QTi+1=QTi+/-\Delta QT \text{ (block 180).}$$

Following the assignment of the new altitude QTi+1 to the theoretical plane PTi of the cartographic map, the computation module 23 reiterates the operations implemented in block 130 so as to determine the first point P1(i+1) of intersection associated with time t1 and, successively, the operations implemented in block 140 so as to determine the second point P2(i+1) of intersection associated with time t2.

At this point, the computation module 23 implements the following operations: recalculate the first distance Dx between points P1(i+1) and P2(i+1) in the manner described in block 150, compare the first distance Dx with the first threshold SX (block 160) and, in the case where the first distance Dx is less than or equal to the first distance threshold SX, assign the last calculated altitude QTi+2=QTi+1+$\Delta QT$ to the target position, or, failing this, change last value of the altitude QTi again, assigning the preset value $\Delta QT$, for example with $\Delta QT$ equal to around 10 metres, according to the relation QTi+2=QTi+1+/-$\Delta QT$, and implementing the calculation and comparison operations described in blocks 130-160.

Instead, when the first distance Dx is less than or equal to the first distance threshold SX (YES exit from block 160), the computation module 23 assigns the theoretical altitude of the ground QTi+n, assigned in the course of the last calculation cycle (cycle n) according to the relation QTR=QTi+n, to a target altitude parameter QTR, indicating the real altitude of the target on the ground (block 170).

In this phase, the computation module 23 determines the component PZo of the position of the target with respect to the Z-axis, assigning it the target altitude QTR via the relation PZo=QTR and, at the same time, determines the component PXo of the position of the target with respect to the X-axis, assigning it the position of one of the two points of intersection, for example point P1(i+n), calculated in the last cycle via the relation PXo=P1X(i+n) (block 190).

At this point, in order to determine with precision the third component PYo of the position of the target with respect to the Y-axis as well, the computation module 23 implements the following operations. In particular, at a time t1', the computation module 23 measures the Heading angle $\psi 1$ of the aircraft 3 and, from a position Pv1, calculates a first point C1(i) of intersection between the tracking axis A of the camera 5 and a theoretical plane PTi set preferably, but not necessarily, at the target altitude QTR (block 200).

At time $t_2'=t_1'+\Delta t$, following time t1', the computation module 23 measures the Heading angle $\psi 2$ and, from a point Pv2, calculates a second point C2(i) of intersection between the tracking axis A of the camera 5 and the theoretical plane PTi (block 210).

Following the two measurements of the Heading angles $\psi 1$ and $\psi 2$ and the determination of the two points of intersection C1(i) and C2(i), the computation module 23 calculates a second distance Dy of the distance vector D' between the first C1(i) and the second C2(i) points (block 220).

It is opportune to specify that the second distance Dy corresponds to the value of the component of the distance vector D between the first C1(i) and the second C2(i) points projected on a vertical plane PV arranged orthogonally to the rectilinear path TR flown by the aircraft 3 (Figure 6).

In particular, the second distance Dy is preferably, but not necessarily, determined by calculating the distance between the points C1'(i) and C2(i)' obtained from the orthogonal projection of the first and second points of intersection C1(i) and C2(i) on the vertical plane PV (Figure 6).

Following the calculation of the second distance Dy, the computation module 23 compares the second distance Dy with a second distance threshold SY and, on the basis of this comparison, checks whether or not a second condition of precision localization is satisfied (block 230).

In particular, the second condition of precision localization is satisfied when the second distance Dy is less than or equal to the second distance threshold SY:

$$Dy <= SY$$

In detail, if the second distance Dy is greater than the second threshold SY (NO exit from block 230), the computation module 23 implements a series of operations to minimize the second distance Dy between the two points C1(i)' and C2(i)' of the target 2 calculated in the two successive times t1' and t2'.

In particular, the minimization of the second distance Dy contemplates changing the Heading angles $\psi1i+1=\psi1i+/-\Delta\psi$ and $\psi2i+1=\psi2i+/-\Delta\psi$ by an equal amount, with a preset increment $+\Delta\psi$ or decrement $-\Delta\psi$, (block 250).

Following the assignment of the new value to the Heading angles $\psi1i+1$ and $\psi2i+1$, the computation module 23 reiterates the calculation operation for the first point C1(i+1) of intersection associated with time t1' and the Heading angle $\psi1i+1$ implemented in block 200, and the calculation operation for the second point C2(i+1) of intersection associated with time t2' and the Heading angle $\psi2i+1$ implemented in block 210.

At this point, the computation module 23 implements the following operations: recalculate the second distance Dy between the points C1'(i+1) and C2'(i+1) in the manner described in block 220 and compare the second distance Dy with the second maximum threshold SY (block 230); in the case where the second distance Dy is greater than the second maximum distance threshold SY (NO exit from block 230), the computation module 23 changes the Heading angles $\psi1i+1$ and $\psi2i+1$ again by the value $\Delta\psi$, equal for example to around two milliradians, and implements the calculation and comparison operations described in blocks 200-250.

If instead there is a convergence of the second distance Dy towards a value lower or equal to the second maximum distance threshold SY (YES exit from block 230), the computation module 23 determines the target position PYo with respect to the Y-axis, i.e. it assigns the component C1Y(i) of the point C1(i) along the Y-axis calculated during the last calculation cycle, or rather the i'th cycle, to the component of the target position PYo along the same Y-axis.

Regarding that described above, it is opportune to specify that the times t1' and t2' can correspond to the times t1 and t2, such that the determination of the points C1(i) and C2(i) of intersection takes place at the same times of calculation of the intersection points P1(i) and P2(i), or be different from them.

The advantages of the above-described system and associated method of operation are evident: the system is able to localize the position of the target with precision without the aid of a laser range-finder device, thereby reducing its manufacturing costs.

In particular, the sequential variation in the altitude of the aircraft 3 effected through the operations implemented in the above-described blocks 130-190 allows error cancellation in the calculation of both the ground altitude, thus permitting the exact position of the target along the Z-axis to be calculated, and the correct position of the target along an axis parallel to the direction of flight of the aircraft, or rather the second component of the target position.

In fact, the system is able to localize a target with a precision in the order of 10 m without resorting to a laser range-finder device and/or a precision inertial platform.

In addition, the method conveniently allows the position of the target to be determined with precision along the Y-axis, thus cancelling the incidence on this measurement of possible errors present in the measurement and determination of the Heading angle. It is evident however that in the case in which the error present in the Heading angle is not very significant, it is possible to determine the position PYo of the target along the Y-axis by assigning it the component along the same Y-axis of one of the points of intersection P1(i) or P2(i) that satisfy the first condition indicated in block 160.

**Claims**

1. Target localization system (1) configured to determine the position of a target (2) on the ground by means of an aircraft (3) without a laser range-finder device, said system (1) comprising an aircraft (3), at least one camera (5) mounted on said aircraft (3) and directed according to its own tracking axis (A), movement means (6) configured to regulate the spatial position of said camera (5) with respect to said aircraft (3) such that said tracking axis (A) remains directed on the target (2) during the flight of the aircraft (3), control means (8) for temporarily piloting the aircraft (3) along a rectilinear flight segment (TR) above the area to monitor, first sensor means (4) measuring the Heading ($\psi$), Pitch ($\theta$) and Roll ($\varphi$) angles of the aircraft (3) to determine the attitude of the aircraft (3) itself, second sensor means to detect the Pan ($\alpha$) and Tilt ($\beta$) tracking angles of said camera (5), detection means (7) configured to detect position of said aircraft (3), and processing means (22) able to localize a target (2) present on the ground and framed by said camera (5);

   said system (1) being **characterized in that** said processing means (22) comprise calculation means (23) configured to:

- determine the spatial position of said tracking axis (A) at a first (t1) and second times (t2) based on the Heading ($\psi$), Pitch ($\theta$) and Roll ($\varphi$) angles of the aircraft (3), the Pan ($\alpha$) and Tilt ($\beta$) angles of said camera (5) and the positions of the aircraft (3) at the same two times (t1)(t2);

- calculate during the flight of the aircraft (3) along said rectilinear flight segment (TR), in at least said two successive times (tl)(t2), at least two intersection points (P1(i))(P2(i)) between said tracking axis (A) and a theoretical plane (PTi) associated with the ground and having a preset initial altitude (QTi);

- repeatedly vary the altitude (QTi) of said theoretical plane (PTi) by a preset value ($\Delta$QT) and calculate, at each said altitude variation ($\Delta$QT) of said theoretical plane (PTi), the position of said at least two intersection points (P1(i))(P2(i)) in the theoretical plane (PTi) itself, until a first condition of precision localization is achieved, in which a first distance (Dx) between the two intersection points (P1(i)), (P2(i)) has a calculated distance less than a first preset threshold (SX);

- assign the altitude (QTi) of the theoretical plane (PTi) that satisfies said first condition of precision localization to the position of the localized target.

2. System according to claim 1, in which said calculation means (23) are configured to determine said first distance (Dx): by calculating the distance between two points (P1'(i), P2'(i)) that are obtained from the projection of said first (P1(i)) and respectively second intersection point (P2(i)) on a plane (PT') substantially orthogonal to said theoretical plane (PTi) and passing through a line coincident with the rectilinear flight segment (TR) flown by the aircraft (3).

3. System according to claims 1 or 2, comprising a video-tracking system (13) configured to control said movement means (6) to move said camera (5) in space to keep its tracking axis (A) directed on said target (2).

4. System according to any of the previous claims, comprising memory means (21) containing at least one digital cartographic map, in which each point of the territory represented by the digital cartographic map is associated with a ground altitude; said theoretical plane (PTi) having an initial theoretical altitude (QTi), which indicates the height of the theoretical plane (PTi) with respect to a preset reference plane (PTO), positioned at zero altitude.

5. System according to any of the previous claims, wherein said calculation means (23) are configured to measure the Heading angle ($\psi$i) of said aircraft (3) in at least two successive times (t1')(t2') during the flight of the aircraft (3) along said rectilinear flight segment (TR), and calculate in said two successive times (t1')(t2') at least two intersection points (C1(i))(C2(i)) between said tracking axis (A) and a theoretical plane (PTi) associated with the ground and having a preset altitude (QTR), said calculation means (23) being configured to repeatedly vary the Heading angles ($\psi$i) measured at said two successive times (t1'),(t2') by a preset value ($\Delta\psi$), and calculate the position of said two intersection points (C1(i))(C2(i)) on said preset theoretical plane (PTi) at each said variation ($\Delta\psi$), until a second condition of precision localization is achieved, in which a second distance (Dy) between said two intersection points (C1(i))(C2(i)) has a calculated distance less than a second preset threshold (SY); said calculation means (23) being configured to assign a component along a Y-axis of one of the intersection points (C1(i))(C2(i)) that satisfy said second condition of precision localization to the position of the localized target along said Y-axis.

6. System according to claim 5, wherein said calculation means (23) are configured to determine said second distance (Dy) by calculating the distance between two points (C1'(i))(C2'(i)), which are obtained from the projection of said first point of intersection (C1(i)) and respectively second point of intersection (C2(i)) on a plane (PV) substantially orthogonal to said rectilinear path (TR) flown by said aircraft (3).

7. A target localization method to determine the position of a target (2) on the ground without a laser range-finder device, by means of a system (1) comprising an aircraft (3), at least one camera (5) mounted on said aircraft (3) and directed according to its own tracking axis (A), movements means (6) configured to regulate the spatial position of said camera (5) with respect to said aircraft (3) such that said tracking axis (A) remains directed on the target (2) during the flight of the aircraft (3), control means (8) for temporarily piloting the flight of the aircraft (3) along a rectilinear flight segment (TR), and processing means (22) configured to localize the position of said target (2); the method comprising:

- measuring the Heading ($\psi$), Pitch ($\theta$) and Roll ($\varphi$) angles of the aircraft (3) to determine the attitude of the aircraft (3);

- detecting the Pan ($\alpha$) and Tilt ($\beta$) tracking angles of said camera (5) and the position of said aircraft (3);

the method being **characterized in that** it comprises:

- determining spatial position of said tracking axis (A) in a first (t1) and second (t2) times according to the Heading ($\psi$), Pitch ($\theta$) and Roll ($\varphi$) angles of said aircraft (2), the Pan ($\alpha$) and Tilt ($\varphi$) angles of said camera (5) and the spatial position assumed by the aircraft (3) at the same two times (t1)(t2);
- calculating (130, 140), in at least said two successive times (t1) ( t2) during the movement of the aircraft (3) along said rectilinear flight segment (TR), at least two respective intersection points (P1(i))(P2(i)) between said tracking axis (A) and a theoretical plane (PTi) associated with the ground and having a preset initial altitude (QTi);
- repeatedly varying said altitude (QTi) of said theoretical plane (PTi) by a preset value ($\Delta$QT);
- calculating, at each said variation ($\Delta$QT) in altitude of the theoretical plane (PTi), the position of said at least two intersection points (P1(i))(P2(i)) in the same theoretical plane (PTi), until a first condition of precision localization is reached, which is satisfied when a first distance (Dx) between the two intersection points (P1(i))(P2(i)) has a calculated distance lower than a first preset threshold (SX);
- assigning the altitude (QTi) of the theoretical plane (PTi) that satisfies said first condition of precision localization to the position of the localized target (2).

8. Method according to claim 7, in which said phase of determining said first distance (Dx) comprises the phase of calculating a distance between two points (P1'(i))(P2'(i)) obtained from the projection of said first (P1(i)) and respectively second intersection point (P2(i)) on a plane (PT') substantially orthogonal to said theoretical plane (PTi) and passing through a line coincident with the rectilinear flight segment (TR) flown by the aircraft (3).

9. Method according to claim 7 or 8, wherein said system (1) comprises memory means (21) containing a digital cartographic map in which each point of the territory represented by the digital cartographic map is associated with a ground altitude; the method comprising the phase of establishing said initial theoretical plane PTi associated with the area to monitor and having an initial theoretical altitude (QTi), which indicates the height of the theoretical plane (PTi) with respect to a preset reference plane (PTO), positioned at zero altitude.

10. Method according to any of claims from 7 to 9, comprising the phases of:

- measuring in at least two successive times (t1')(t2') during the flight of the aircraft (3) along said flight segment (TR), the Heading angle ($\psi$i1,$\psi$i2) of said aircraft (3),
- calculating during said successive times (t1')(t2'), at least two intersection points (C1(i))(C2(i)) between said tracking axis (A) and a theoretical plane (PTi) associated with the ground and having a preset altitude (QTR),
- repeatedly varying the measured Heading angles ($\psi$i1,$\psi$i2) by a preset value ($\Delta\psi$),
- calculating the position of said two intersection points (C1(i))(C2(i)) on said preset theoretical plane (PTi) at each said variation ($\Delta\psi$), until a second condition of precision localization is achieved, in which a second distance (Dy) between said two intersection points (C1(i))(C2(i)) has a calculated distance lower than a second preset threshold (SY), and
- assigning a component along a Y-axis of one of the intersection points (C1(i))(C2(i)) that satisfies said second condition of precision localization to the position of the localized target along said Y-axis.

11. Method according to claim 10, comprising the phase of determining said second distance (Dy): by calculating the distance between two intersection points (C1'(i))(C2'(i)), which are obtained from the projection of said first (C1(i)) and respectively second intersection point (C2(i)) on a plane (PV) substantially orthogonal to said rectilinear path (TR) flown by said aircraft (3).

12. Computer **characterized in that** it implements a method as indicated in any of claims 7 to 11.

13. Software product that can be loaded into the memory of a processing means and is designed to implement, when executed, the method according to any of claims 7 to 11.

**Patentansprüche**

1. Ziellokalisierungssystem (1), das ausgestaltet ist, um die Position eines Ziels (2) auf dem Boden mittels eines Luftfahrzeugs (3) ohne eine Laserentfernungsmessungsvorrichtung zu bestimmen, das System (1) umfasst:

- ein Luftfahrzeug (3);
- mindestens eine Kamera (5), die an dem Luftfahrzeug (3) befestigt und gemäß ihrer eigenen Spurachse (A) ausgerichtet ist;

- Bewegungsmittel (6), die ausgestaltet sind, um die räumliche Position der Kamera (5) gegenüber dem Luftfahrzeug (3) so zu regulieren, dass die Spurachse (A) während dem Flug des Luftfahrzeugs (3) auf das Ziel (2) gerichtet bleibt;

- Steuermittel (8) zum vorübergehenden Steuern des Luftfahrzeugs (3) entlang eines geradlinigen Flugsegments (TR) über dem zu überwachenden Gebiet;

- erste Sensormittel (4) zum Messen des Steuerkurs- ($\psi$), Steigungs- ($\theta$) und Roll- ($\varphi$) Winkel des Luftfahrzeugs (3), um die Fluglage des Luftfahrzeugs (3) an sich zu bestimmen;

- zweite Sensormittel zum Erfassen des Schwenk- ($\alpha$) und Kipp- ($\beta$) Spurwinkels der Kamera (5);

- Erfassungsmittel (7), die ausgestaltet sind, um die Position des Luftfahrzeugs (3) zu erfassen; und

- Verarbeitungsmittel (22), die ein Ziel (2) orten können, das sich auf dem Boden befindet und von der Kamera (5) aufgenommen wird,

das System (1) ist **dadurch gekennzeichnet, dass** die Verarbeitungsmittel (22) Berechnungsmittel (23) aufweisen, die ausgestaltet sind um:

- die räumliche Position der Spurachse (A) zu einem ersten (t1) und einem zweiten (t2) Zeitpunkt basierend auf dem Steuerkurs- ($\psi$), Steigungs- ($\theta$) und Roll- ($\varphi$) Winkel des Luftfahrzeugs (3), dem Schwenk- ($\alpha$) und Kipp- ($\beta$) Winkel der Kamera (5) und der Position des Luftfahrzeugs (3) bei denselben zwei Zeiten (t1) (t2) zu bestimmen;

- während des Flugs des Luftfahrzeugs (3) entlang des geradlinigen Flugsegments (TR) für zumindest die zwei aufeinander folgenden Zeitpunkte (t1) (t2) zumindest zwei Schnittpunkte (P1(i)) (P2(i)) zwischen der Spurachse (A) und einer theoretischen Ebene (PTi) zu berechnen, die dem Boden zugeordnet ist und eine vorgegebene Anfangshöhe (QTi) besitzt;

- die Höhe (QTi) der theoretischen Ebene (PTi) um einen vorgegebenen Wert ($\Delta$QT) immer wieder zu ändern, und zu jeder Höhenänderung ($\Delta$QT) der theoretischen Ebene (PTi) die Position der mindestens zwei Schnittpunkte (P1(i)) (P2(i)) in der theoretischen Ebene (PTi) an sich zu berechnen bis eine erste Bedingung einer Präzisionslokalisierung erfüllt ist, bei der ein erster Abstand (Dx) zwischen den zwei Schnittpunkten (P1(i)), (P2(i)) einen berechneten Abstand kleiner als einen ersten Schwellwert (SX) aufweist;

- die Höhe (QTi) der theoretischen Ebene (PTi), die die erste Bedingung der Präzisionslokalisierung erfüllt, der Position des georteten Ziels zuzuordnen.

2.  System nach Anspruch 1, wobei die Berechnungsmittel (23) ausgestaltet sind, um den ersten Abstand (Dx) durch Berechnen des Abstandes zwischen zwei Punkten (P1'(i), P2'(i)) zu berechnen, die aus der Projektion des ersten (P1(i)) bzw. zweiten Schnittpunkts (P2(i)) auf einer Ebene (PT') erhalten werden, die im Wesentlichen orthogonal zur theoretischen Ebene (PTi) steht und durch eine Linie verläuft, die mit dem von dem Luftfahrzeug (3) geflogenen geradlinigen Flugsegment (TR) zusammenfällt.

3.  System nach Anspruch 1 oder 2, mit einem Videoverfolgungssystem (13), das ausgestaltet ist, um die Bewegungsmittel (6) zu steuern, um die Kamera (5) räumlich so zu steuern, dass ihre Spurachse (A) auf das Ziel (2) gerichtet bleibt.

4.  System nach einem der vorstehenden Ansprüche, mit Speichermittel (21), die zumindest eine digitale Geländekarte enthalten, in der jeder Punkt des von der digitalen Geländekarte wiedergegebenen Gebiets einer Bodenhöhe zugeordnet ist; die theoretische Ebene (PTi) weist eine theoretische Starthöhe (QTi) auf, die die Höhe der theoretischen Ebene (PTi) bezogen auf eine vorgegebene Referenzebene (PTO) angibt, die beim Höhenwert NULL angeordnet ist.

5.  System nach einem der vorstehenden Ansprüche, wobei die Berechnungsmittel (23) ausgestaltet sind, um den Steuerkurswinkel ($\psi$i) des Luftfahrzeugs (3) bei zumindest zwei aufeinander folgenden Zeitpunkten (t1') (t2') während des Flugs des Luftfahrzeugs (3) entlang des geradlinigen Flugsegments (TR) zu messen, und um bei den zwei aufeinander folgenden Zeitenpunkten (t1') (t2') mindestens zwei Schnittpunkte (C1(i)) (C2(i)) zwischen der Spurachse (A) und einer theoretischen Ebene (PTi) zu berechnen, die dem Boden zugeordnet ist und eine vorgegebene Höhe (QTR) aufweist, die Berechnungsmittel (23) ausgestaltet sind, um den Steuerkurswinkel ($\psi$i), der bei den zwei aufeinander folgenden Zeitpunkten (t1') (t2') gemessen wurden, um einen vorgegebenen Wert ($\Delta\psi$) immer wieder zu ändern, und um die Position der zwei Schnittpunkte (C1(i)) (C2(i)) auf der vorgegebenen theoretischen Ebene (PTi) für jede Änderung ($\Delta\psi$) zu berechnen bis eine zweite Bedingung einer Präzisionslokalisierung erfüllt ist, bei der ein zweiter Abstand (Dy) zwischen den zwei Schnittpunkten (C1(i)) (C2(i)) einen berechneten Abstand kleiner als einem zweiten vorgegebenen Schwellwert (SY) aufweist; die Berechnungsmittel (23) ausgestaltet sind, um eine Komponente entlang einer Y-Achse von einem der Schnittpunkte (C1(i)) (C2(i)), der die zweite Bedingung der Präzisionslokalisierung erfüllt, der Position des georteten Ziels entlang der Y-Achse zuzuordnen.

6. System nach Anspruch 5, wobei die Berechnungsmittel (23) ausgestaltet sind, um den zweiten Abstand (Dy) durch Berechnen des Abstandes zwischen zwei Punkten (C1'(i)) (C2'(i)) zu bestimmen, die von der Projektion des ersten Schnittpunkts (C1(i)) bzw. des zweiten Schnittpunkts (C2(i)) auf eine Ebene (PV) erhalten werden, die im Wesentlichen orthogonal zu dem geradlinigen Pfad (TR) verläuft, der von dem Luftfahrzeug (3) geflogen wurde.

7. Ein Ziellokalisierungsverfahren, um die Position eines Ziels (2) auf dem Boden ohne eine Laserentfernungsmessungsvorrichtung mittels eines Systems (1) zu bestimmen, das System (1) umfasst:

   - ein Luftfahrzeug (3);
   - mindestens eine Kamera (5), die an dem Luftfahrzeug (3) befestigt und gemäß ihrer eigenen Spurachse (A) ausgerichtet ist;
   - Bewegungsmittel (6), die ausgestaltet sind, um die räumliche Position der Kamera (5) gegenüber dem Luftfahrzeug (3) so zu regulieren, dass die Spurachse (A) während dem Flug des Luftfahrzeugs (3) auf das Ziel (2) gerichtet bleibt;
   - Steuermittel (8) zum vorübergehenden Steuern des Luftfahrzeugs (3) entlang eines geradlinigen Flugsegments (TR);
   - Verarbeitungsmittel (22), die ausgestaltet sind, um die Position des Ziels (2) zu orten, das Verfahren umfasst:
   - Messen des Steuerkurs- ($\psi$), Steigungs- ($\theta$) und Roll- ($\varphi$) Winkels des Luftfahrzeugs (3), um die Fluglage des Luftfahrzeugs (3) zu bestimmen;
   - Erfassen des Schwenk- ($\alpha$) und Kipp- ($\beta$) Spurwinkels der Kamera (5) und der Position des Luftfahrzeugs (3);
   - Bestimmen der räumliche Position der Spurachse (A) zu einem ersten (t1) und einem zweiten (t2) Zeitpunkt gemäß dem Steuerkurs- ($\psi$), Steigungs- ($\theta$) und Roll- ($\varphi$) Winkel des Luftfahrzeugs (3), dem Schwenk- ($\alpha$) und Kipp- ($\beta$) Winkel der Kamera (5) und der von dem Luftfahrzeug (3) zu denselben zwei Zeiten (t1) (t2) vermuteten räumlichen Position;
   - Berechnen für zumindest die zwei aufeinander folgenden Zeitpunkte (t1) (t2) während des Flugs des Luftfahrzeugs (3) entlang des geradlinigen Flugsegments (TR) zumindest zwei Schnittpunkte (P1(i)) (P2(i)) zwischen der Spurachse (A) und einer theoretischen Ebene (PTi), die dem Boden zugeordnet ist und eine vorgegebene Anfangshöhe (QTi) besitzt;
   - wiederholtes Ändern der Höhe (QTi) der theoretischen Ebene (PTi) um einen vorgegebenen Wert ($\Delta$QT);
   - Berechnen der Position der mindestens zwei Schnittpunkte (P1(i)) (P2(i)) in der theoretischen Ebene (PTi) zu jeder Höhenänderung ($\Delta$QT) der theoretischen Ebene (PTi) bis eine erste Bedingung einer Präzisionslokalisierung erreicht wird, die erfüllt ist, wenn ein erster Abstand (Dx) zwischen den zwei Schnittpunkten (P1(i)), (P2(i)) einen berechneten Abstand kleiner als einen ersten Schwellwert (SX) aufweist;
   - Zuordnen der Höhe (QTi) der theoretischen Ebene (PTi), die die erste Bedingung der Präzisionsortung erfüllt, zu der Position des georteten Ziels.

8. Verfahren nach Anspruch 7, wobei das Stadium zum Bestimmen des ersten Abstands (Dx) das Stadium zum Berechnen eines Abstands zwischen zwei Punkten (P1'(i), P2'(i)) umfasst, die aus der Projektion des ersten (P1(i)) bzw. zweiten Schnittpunkts (P2(i)) auf einer Ebene (PT') erhalten werden, die im Wesentlichen orthogonal zur theoretischen Ebene (PTi) steht und durch eine Linie verläuft, die mit dem von dem Luftfahrzeug (3) geflogenen geradlinigen Flugsegment (TR) zusammenfällt.

9. Verfahren nach Anspruch 7 oder 8, wobei das System (1) Speichermittel (21) umfasst, die eine digitale Geländekarte enthalten, in der jeder Punkt des von der digitalen Geländekarte wiedergegebenen Gebiets einer Bodenhöhe zugeordnet ist; das Verfahren umfasst das Stadium zum Bilden der theoretische Anfangsebene (PTi), die dem zu überwachenden Gebiet zugeordnet ist und eine theoretische Anfangshöhe (QTi) aufweist, die die Höhe der theoretischen Ebene (PTi) bezogen auf eine gegenwärtige Referenzebene (PTO) angibt, die beim Höhenwert NULL angeordnet ist.

10. Verfahren nach einem der Ansprüche 7 bis 9, mit den Stadien:

   - Messen des Steuerkurswinkels ($\psi$1, $\psi$2) des Luftfahrzeugs (3) bei zumindest zwei aufeinander folgenden Zeitpunkten (t1') (t2') während des Flugs des Luftfahrzeugs (3) entlang des geradlinigen Flugsegments (TR);
   - Berechnen während der zwei aufeinander folgenden Zeitenpunkten (t1') (t2') von mindestens zwei Schnittpunkten (C1(i)) (C2(i)) zwischen der Spurachse (A) und einer theoretischen Ebene (PTi), die dem Boden zugeordnet ist und eine vorgegebene Höhe (QTR) aufweist;
   - Wiederholtes Ändern der gemessenen Steuerkurswinkel ($\psi$1, $\psi$2) um einen vorgegebenen Wert ($\Delta\psi$);
   - Berechnen der Position der zwei Schnittpunkte (C1(i)) (C2(i)) auf der vorgegebenen theoretischen Ebene (PTi) für jede Änderung ($\Delta\psi$) bis eine zweite Bedingung einer Präzisionslokalisierung erfüllt ist, bei der ein zweiter Abstand (Dy) zwischen den zwei Schnittpunkten (C1(i)) (C2(i)) einen berechneten Abstand kleiner als einem zweiten vorgegebenen Schwellwert (SY) aufweist; und

- Zuordnen einer Komponente entlang einer Y-Achse von einem der Schnittpunkte (C1(i)) (C2(i)), der die zweite Bedingung der Präzisionslokalisierung erfüllt, zu der Position des georteten Ziels entlang der Y-Achse.

**11.** Verfahren nach Anspruch 10, mit dem Stadium zum Bestimmen des zweiten Abstands (Dy) durch Berechnen des Abstandes zwischen zwei Punkten (C1'(i)) (C2'(i)), die von der Projektion des ersten Schnittpunkts (C1(i)) bzw. des zweiten Schnittpunkts (C2(i)) auf eine Ebene (PV) erhalten werden, die im Wesentlichen orthogonal zu dem geradlinigen Pfad (TR) verläuft, der von dem Luftfahrzeug (3) geflogen wurde.

**12.** Computer, **dadurch gekennzeichnet, dass** er das Verfahren gemäß einem der Ansprüchen 7 bis 11 umsetzt.

**13.** Softwareprodukt, das in den Speicher eines Verarbeitungsmittels geladen werden kann und vorgesehen ist, das Verfahren gemäß einem der Ansprüchen 7 bis 11 umzusetzen, wenn es ausgeführt wird.

## Revendications

**1.** Système de localisation de cible (1) configuré pour déterminer la position d'une cible (2) sur le sol au moyen d'un aéronef (3) sans dispositif télémètre laser, ledit système (1) comprenant un aéronef (3), au moins une caméra (5) montée sur ledit aéronef (3) et dirigée selon son propre axe de poursuite (A), un moyen de mouvement (6) configuré pour réguler la position spatiale de ladite caméra (5) par rapport audit aéronef (3) de telle sorte que ledit axe de poursuite (A) reste dirigé sur la cible (2) pendant le vol de l'aéronef (3), un moyen de commande (8) permettant de piloter temporairement l'aéronef (3) le long d'un segment de vol rectiligne (TR) au-dessus de la zone à surveiller, un premier moyen de capteur (4) mesurant les angles de cap ($\psi$), de tangage ($\theta$) et de roulis ($\varphi$) de l'aéronef (3) pour déterminer l'assiette de l'aéronef (3) lui-même, un second moyen de capteur pour détecter les angles de poursuite d'ouverture ($\alpha$) et d'inclinaison ($\beta$) de ladite caméra (5), un moyen de détection (7) configuré pour détecter la position dudit aéronef (3), et un moyen de traitement (22) capable de localiser une cible (2) présente sur le sol et cadrée par ladite caméra (5) ;

ledit système (1) étant **caractérisé en ce que** ledit moyen de traitement (22) comprend des moyens de calcul (23) configurés pour :

- déterminer la position spatiale dudit axe de poursuite (A) à des premier (t1) et second (t2) temps en se basant sur les angles de cap ($\psi$), de tangage ($\theta$) et de roulis ($\varphi$) de l'aéronef (3), les angles d'ouverture ($\alpha$) et d'inclinaison ($\beta$) de ladite caméra (5) et les positions de l'aéronef (3) auxdits deux temps (t1) (t2) ;

- calculer pendant le vol de l'aéronef (3) le long dudit segment de vol rectiligne (TR), dans au moins lesdits deux temps successifs (t1) (t2), au moins deux points d'intersection (P1(i)) (P2(i)) entre ledit axe de poursuite (A) et un plan théorique (PTi) associé au sol et ayant une altitude initiale préétablie (QTi) ;

- faire varier de façon répétée l'altitude (QTi) dudit plan théorique (PTi) d'une valeur préétablie ($\Delta$QT) et calculer, à chaque dite variation d'altitude ($\Delta$QT) dudit plan théorique (PTi), la position desdits au moins deux points d'intersection (P1(i)) (P2(i)) dans le plan théorique (PTi) lui-même, jusqu'à ce qu'une première condition de localisation de précision soit atteinte, dans laquelle une première distance (Dx) entre les deux points d'intersection (P1(i)), (P2(i)) a une distance calculée inférieure à un premier seuil préétabli (SX) ;

- attribuer l'altitude (QTi) du plan théorique (PTi) qui satisfait ladite première condition de localisation de précision à la position de la cible localisée.

**2.** Système selon la revendication 1, dans lequel lesdits moyens de calcul (23) sont configurés pour déterminer ladite première distance (Dx) en calculant la distance entre deux points (P1'(i), P2'(i)) qui sont obtenus à partir de la projection dudit premier (P1(i)) et respectivement dudit second point d'intersection (P2(i)) sur un plan (PT') sensiblement orthogonal audit plan théorique (PTi) et passant par une ligne coïncidente avec le segment de vol rectiligne (TR) parcouru par l'aéronef (3).

**3.** Système selon la revendication 1 ou 2, comprenant un système de poursuite vidéo (13) configuré pour commander ledit moyen de mouvement (6) pour déplacer ladite caméra (5) dans l'espace pour maintenir son axe de poursuite (A) dirigé sur ladite cible (2).

**4.** Système selon l'une quelconque des revendications précédentes, comprenant un moyen de mémoire (21) contenant au moins une carte cartographique numérique, dans laquelle chaque point du territoire représenté par la carte cartographique numérique est associé à une altitude au sol ; ledit plan théorique (PTi) ayant une altitude théorique initiale (QTi), qui indique la hauteur du plan théorique (PTi) par rapport à un plan de référence préétabli (PTO), positionné à une altitude zéro.

5. Système selon l'une quelconque des revendications précédentes, dans lequel lesdits moyens de calcul (23) sont configurés pour mesurer l'angle de cap ($\psi i$) dudit aéronef (3) dans au moins deux temps successifs (t1') (t2') pendant le vol de l'aéronef (3) le long dudit segment de vol rectiligne (TR), et calculer dans lesdits au moins deux temps successifs (t1') (t2') au moins deux points d'intersection (C1(i)) (C2(i)) entre ledit axe de poursuite (A) et un plan théorique (PTi) associé au sol et ayant une altitude préétablie (QTR), lesdits moyens de calcul (23) étant configurés pour faire varier de façon répétée les angles de cap ($\psi i$) mesurés auxdits deux temps successifs (t1'), (t2') par une valeur préétablie ($\Delta \psi$), et calculer la position desdits deux points d'intersection (C1(i)) (C2(i)) sur ledit plan théorique préétabli (PTi) à chaque dite variation ($\Delta \psi$), jusqu'à ce qu'une seconde condition de localisation de précision soit atteinte, dans laquelle une seconde distance (Dy) entre lesdits deux points d'intersection (C1(i)) (C2(i)) a une distance calculée inférieure à un second seuil préétabli (SY) ; lesdits moyens de calcul (23) étant configurés pour attribuer une composante le long d'un axe Y de l'un des points d'intersection (C1(i)) (C2(i)) qui satisfont ladite seconde condition de localisation de précision à la position de la cible localisée le long dudit axe Y.

6. Système selon la revendication 5, dans lequel lesdits moyens de calcul (23) sont configurés pour déterminer ladite seconde distance (Dy) en calculant la distance entre deux points (C1'(i)) (C2'(i)), qui sont obtenus à partir de la projection dudit premier point d'intersection (C1(i)) et respectivement du second point d'intersection (C2(i)) sur un plan (PV) sensiblement orthogonal audit chemin rectiligne (TR) parcouru par ledit aéronef (3).

7. Méthode de localisation de cible pour déterminer la position d'une cible (2) sur le sol sans dispositif télémètre laser, au moyen d'un système (1) comprenant un aéronef (3), au moins une caméra (5) montée sur ledit aéronef (3) et dirigée selon son propre axe de poursuite (A), un moyen de mouvement (6) configuré pour réguler la position spatiale de ladite caméra (5) par rapport audit aéronef (3) de telle sorte que ledit axe de poursuite (A) reste dirigé sur la cible (2) pendant le vol de l'aéronef (3), un moyen de commande (8) permettant de piloter temporairement le vol de l'aéronef (3) le long d'un segment de vol rectiligne (TR), et un moyen de traitement (22) configuré pour localiser la position de ladite cible (2) ;
la méthode comprenant :

- la mesure des angles de cap ($\psi$), de tangage ($\theta$) et de roulis ($\varphi$) de l'aéronef (3) pour déterminer l'assiette de l'aéronef (3) ;
- la détection des angles de poursuite d'ouverture ($\alpha$) et d'inclinaison ($\beta$) de ladite caméra (5) et la position dudit aéronef (3) ;

la méthode étant **caractérisée en ce qu'**elle comprend :

- la détermination de la position spatiale dudit axe de poursuite (A) dans un premier (t1) et un second (t2) temps selon les angles de cap ($\psi$), de tangage ($\theta$) et de roulis ($\varphi$) dudit l'aéronef (2), les angles d'ouverture ($\alpha$) et d'inclinaison ($\beta$) de ladite caméra (5) et la position spatiale adaptée par l'aéronef (3) auxdits deux temps (t1) (t2) ;
- le calcul (130, 140), dans au moins lesdits deux temps successifs (t1) (t2) pendant le mouvement de l'aéronef (3) le long dudit segment de vol rectiligne (TR), d'au moins deux points d'intersection (P1(i)) (P2(i)) respectifs entre ledit axe de poursuite (A) et un plan théorique (PTi) associé au sol et ayant une altitude initiale préétablie (QTi) ;
- la variation répétée de ladite altitude (QTi) dudit temps théorique (PTi) d'une valeur préétablie ($\Delta$QT) ;
- le calcul, à chaque dite variation ($\Delta$QT) d'altitude dudit plan théorique (PTi), de la position desdits au moins deux points d'intersection (P1(i)) (P2(i)) dans le même plan théorique (PTi), jusqu'à ce qu'une première condition de localisation de précision soit atteinte, qui est satisfaite lorsqu'une première distance (Dx) entre les deux points d'intersection (P1(i)) (P2(i)) a une distance calculée inférieure à un premier seuil préétabli (SX) ;
- l'attribution de l'altitude (QTi) du plan théorique (PTi) qui satisfait ladite première condition de localisation de précision à la position de la cible localisée (2).

8. Méthode selon la revendication 7, dans laquelle ladite phase consistant à déterminer ladite première distance (Dx) comprend la phase de calcul d'une distance entre deux points (P1'(i)) (P2'(i)) obtenus à partir de la projection desdits premier (P1(i)) et respectivement second (P2(i)) points d'intersection sur un plan (PT') sensiblement orthogonal audit plan théorique (PTi) et passant par une ligne coïncidente avec le segment de vol rectiligne (TR) parcouru par l'aéronef (3).

9. Méthode selon la revendication 7 ou 8, dans laquelle ledit système (1) comprend un moyen de mémoire (21) contenant une carte cartographique numérique, dans laquelle chaque point du territoire représenté par la carte cartographique numérique est associé à une altitude au sol ; la méthode comprenant la phase d'établissement dudit plan théorique initial (PTi) associé à la zone à surveiller et ayant une altitude théorique initiale (QTi), qui indique la hauteur du plan théorique (PTi) par rapport à un plan de référence préétabli (PTO), positionné à une altitude zéro.

10. Méthode selon l'une quelconque des revendications 7 à 9, comprenant les phases de :

- mesure pendant au moins deux temps successifs (t1') (t2') pendant le vol de l'aéronef (3) le long dudit segment de vol (TR), de l'angle de cap ($\psi i1$, $\psi i2$) dudit aéronef (3),
- calcul pendant lesdits temps successifs (t1') (t2') d'au moins deux points d'intersection (C1(i)) (C2(i)) entre ledit axe de poursuite (A) et un plan théorique (PTi) associé au sol et ayant une altitude préétablie (QTR),
- variation répétée des angles de cap ($\psi i1$, $\psi i2$) mesurés d'une valeur préétablie ($\Delta\psi$),
- calcul de la position desdits deux points d'intersection (C1(i)) (C2(i)) sur ledit plan théorique préétabli (PTi) à chaque dite variation ($\Delta\psi$), jusqu'à ce qu'une seconde condition de localisation de précision soit atteinte, dans laquelle une seconde distance (Dy) entre lesdits deux points d'intersection (C1(i)) (C2(i)) a une distance calculée inférieure à un second seuil préétabli (SY), et
- attribution d'une composante le long d'un axe Y de l'un des points d'intersection (C1(i)) (C2(i)) qui satisfait ladite seconde condition de localisation de précision à la position de la cible localisée le long dudit axe Y.

11. Méthode selon la revendication 10, comprenant la phase de détermination de ladite seconde distance (Dy) en calculant la distance entre deux points d'intersection ($C_1$'(1)) (C2'(i)), qui sont obtenus à partir de la projection dudit premier (C1(i)) et respectivement dudit second (C2(i)) point d'intersection sur un plan (PV) sensiblement orthogonal audit chemin rectiligne (TR) parcouru par ledit aéronef (3).

12. Ordinateur **caractérisé en ce qu'**il implémente une méthode telle qu'indiquée dans l'une quelconque des revendications 7 à 11.

13. Produit logiciel qui peut être chargé dans la mémoire d'un moyen de traitement et est conçu pour implémenter, lorsqu'il est exécuté, la méthode selon l'une quelconque des revendications 7 à 11.

FIG. 1

Maintain rectilinear aircraft
path — 100

Localize target and
activate video-tracking — 110

Establish theoretical plane PTi
and theoretical altitude $QT_i$ — 120

Calculate first point of intersection P1(i) — 130

Calculate second point of intersection P2(i) — 140

Calculate component Dx of vector distance between
the two points P1(i) and P2(i) — 150

$Dx \leq SX$ ? — 160

NO

YES

$PZ_o = QTR = QT_{i+n}$ — 170

$QT_{i+1} = QT_i \pm \Delta QT$ — 180

$PX_o = P1X(i+n)$ — 190

B

## FIG. 2

FIG. 3

FIG. 4

FIG. 5

# FIG. 6

# FIG. 7

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1783455 A
- FR 2798999
- US 6281970 B1